# EUROPEAN PATENT SPECIFICATION

(11) **EP 3 663 553 B1**
(45) Date of publication and mention of the grant of the patent: **19.02.2025**
(21) Application number: 19213964.0
(22) Date of filing: 05.12.2019
(51) Int. Cl.: F01N 13/00

(54) **SYSTEM FOR THERMAL MANAGEMENT OF AN AFTER TREATMENT SYSTEM (ATS)**
SYSTEM ZUM THERMISCHEN MANAGEMENT EINES NACHBEHANDLUNGSSYSTEMS (ATS)
SYSTÈME DE GESTION THERMIQUE D'UN SYSTÈME DE POST-TRAITEMENT (ATS)

(30) Priority: 05.12.2018 IT 201800010826
(43) Date of publication of application: 10.06.2020
(73) Proprietor: FPT Motorenforschung AG, 9320 Arbon (CH)
(72) Inventor: GSTREIN, Wolfgang, 6900 BREGENZ (AT)
(74) Representative: Studio Torta S.p.A.

(56) References cited:
- EP-A2- 2 410 149
- DE-A1- 102008 061 026
- DE-A1- 102009 027 350
- DE-C1- 3 537 080

## Description

### CROSS-REFERENCE TO RELATED APPLICATIONS

This patent application claims priority from Italian patent application no. 102018000010826 filed on 05/12/2018.

### Field of the invention

The present invention relates to the thermal management of an after treatment system of an internal combustion engine.

### Description of the prior art

An after treatment system (ATS) is connected on the exhaust line of the diesel internal combustion engine, which comprises a certain number of devices to reduce/eliminate pollutants contained in the exhaust gas, such as NOx, HC, particulate matter.

The most implemented configuration for diesel engines has, according to the gas flow direction, a DOC (Diesel oxidation catalyst), a DPF (Diesel particulate filter) and active SCR (selective reduction catalyst). This configuration is called "traditional ATS" in the following. The SCR contributes to the elimination/abatement of NOx, however, it needs to reach at least the so-called "light off" temperature of about 180°C - 250°C.

At cold start, the SCR is practically unable to convert NOx. The DOC is usually arranged upstream of the SCR to produce NO2 needed for the SCR working in the NOx conversion.

DOC and DPF have a relevant mass that drains a relevant heat amount during ATS warm up, therefore, the SCR warm up takes a relevant time, especially during cold winter nights.

Technical regulations require the ATS be effective also at cold start, therefore, several possible solutions have been considered to fulfil such restrictive requirements.

DE19837509 discloses an engine having an exhaust gas cleaner/catalytic converter and a storage volume for part of the exhaust flow after starting the engine. The vacuum in the storage volume is maintained by a shut-off valve when the engine is stopped. An under pressure pump to evacuate the storage volume is connected to it with its intake side. The feed side of the pump is connected to intake unit of the engine, and/or to the exhaust pipe upstream of the exhaust gas cleaner/main catalytic converter.

This solution can be strongly modified.

DE102009027350A1 discloses an exhaust line having two heat exchangers and a catalyst between such heat exchangers. A heat transfer medium flows along a circuit, through the two heat exchangers and through a tank. An ECU controls the flow of the heat transfer medium according to an exhaust gas temperature.

DE3537080C1 and EP2410149A2 disclose solutions provided with an exhaust system section surrounded by a jacket, where vacuum can be generated.

DE102008061026A1 discloses an exhaust system section provided with a heat exchanger receiving an engine cooling liquid. The engine cooling liquid flows also in another heat exchanger for conditioning a vehicle passenger compartment.

### Summary of the invention

Therefore, the main object of the present invention is to provide for improving the thermal management of an after treatment system (ATS) of an internal combustion engine.

The basic idea of the present invention is to implement a jacket enveloping at least a portion of the ATS and to introduce a thermal liquid in said jacket, so as to exchange heat between the thermal liquid and said at least a portion of the ATS when the engine is operative, and to store said thermal liquid in a well-insulated tank when the engine is shut-off in order to store its heat content. This is described in independent claim 1.

According to a preferred embodiment of the invention, a switch or button can be manipulated or pressed to activate or enable a thermal management function, which causes the introduction of the thermal liquid into the tank**.**

According to a preferred embodiment, the thermal management function activation commands a vacuum pump arranged to produce vacuum within the jacket for a better insulation.

When the engine is started at low temperatures, the vacuum is released after the ATS temperature is raised above a first temperature threshold. This in order to avoid deformation of the wall and/or ATS canning.

According to a preferred embodiment of the invention, the thermal management function activation commands a pump arranged to move the warm thermal liquid from the ATS jacket to the well-insulated tank.

According to an embodiment, when the engine is started at low temperatures, the pump is arranged to move back the stored warm thermal liquid from the well-insulated tank to the ATS jacket, so as to help the ATS to increase its temperature.

In particular, the thermal management function activation causes, first, the thermal liquid motion from the ATS jacket to the well-insulated tank, afterwards the vacuum pump activation to generate vacuum within the jacket. After the engine re-start, the vacuum itself can be useful to suck the thermal liquid from the well-insulated tank into the jacket.

If the temperature of the stored thermal liquid, at the re-start of the engine, is not useful to increase the ATS temperature, such liquid is gradually moved into the jacket only when the ATS temperature is over the above-mentioned light-off temperature threshold.

According to another embodiment of the invention, the jacket is exploited also to adjust the ATS temperature, in particular to maintain the temperature of the ATS close to such light-off threshold. Indeed, in such conditions, the dosing module arranged immediately upstream of the SCR (Selective catalytic reduction) is capable to evaporate the liquid urea based reducing agent, and, at the same time, the ammonia storage efficiency of the SCR is optimal.

At the same time, the excess of thermal energy is stored in the thermal liquid itself. Therefore, when the engine is switched off for a long period, before vacuum generation in the ATS jacket, such thermal liquid is moved into the above well-insulated tank.

When the thermal liquid coincides with the engine water, such water can be first circulated through the combustion engine at cold start and, after ATS light-off, circulated also through the ATS jacket.

According to a further object of the invention, also the engine oil is stored in a well-insulated tank, such that to save its heat content during long period shut off.

These and further objects are achieved by means of the attached dependent claims, which describe preferred embodiments of the invention, forming an integral part of the present description.

### Brief description of the drawings

The invention will become fully clear from the following detailed description, given by way of a mere exemplifying and non limiting examples, to be read with reference to the attached drawing figures, wherein:
- Fig. 1 shows a first option, which is not part of the present invention,
- Fig.2 shows a second option, which is provided according to the teachings of the present invention and can be combined with the features of figure 1;
- Figures 3 and 4 discloses two exemplary combinations of the schemes of figures 1 and 2.

The same reference numerals and letters in the figures designate the same or functionally equivalent parts.

According to the present invention, the term "second element" does not imply the presence of a "first element", first, second, etc.. are used only as labels for improving the clarity of the description and they should not be interpreted in a limiting way.

### Detailed description of the preferred embodiments

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well known technologies are not described in detail.

According to the figures, a combustion engine 1, such as a gasoline or diesel engine is provided with an intake 11 and one or more exhaust manifolds 2.

The intake is connected operatively with an inlet line 12 provided with a filter box 14 suitable to filter the fresh air sucked by the internal combustion engine.

In the example, the engine implements two exhaust manifolds, however, one single manifold can be implemented to convey the exhaust gas produced by all the several cylinders defining the internal combustion engine 1.

The after treatment system ATS includes for example a first pollutants abatement device 3, a second 5 and a third abatement device 19.

At least a portion of the ATS, for example at least one of the pollutants abatement devices, is wrapped within a jacket 22. Preferably, the entire ATS is wrapped by the jacket. When the internal combustion engine is turbocharged, the jacket can wrap also the turbine. Thus, the turbine is intended, by a gas path and thermal point of view, as a portion of the ATS.

In the examples, two initial pipe portions 2 are directly connected to the internal combustion engine. Two first abatement devices 3 are present in parallel on the initial pipe portions 2. In the example, just one of the two first abatement devices 3 is wrapped within the jacked 22. This means that the devices that deserve to be wrapped can be selected according to the circumstances. The ATS comprises, for each first abatement devices 3, a respective pipe portion 4. The two pipe portions 4 convey into one single remaining pipe portion.

The jacket 22 is operatively connected to a vacuum pump 24 through a first piping 7 at the port 23 of the jacket.

The jacket is sealed and capable to maintain the vacuum generated by the vacuum pump.

An on/off valve 10 is arranged on the piping 7, upstream or downstream of the vacuum pump.

A button (not disclosed) is arranged on the dashboard. When the driver supposes to leave the vehicle shut-off for a long period, after he has shut-off the engine, he/she can push such button to activate the thermal management function according to the present invention.

The vacuum pump can be activated immediately after the button pressing or only when the ATS temperature is under a predetermined temperature threshold, because, at high temperature some portions of the metal sheets defining the ATS canning of the abatement devices can be damaged by the vacuum.

The expression "long period" should be understood according to the circumstances. For example, in extreme environment conditions, such as during winter with temperatures lower than 20-30 °C under 0°C, three hours can be considered as a "long period".

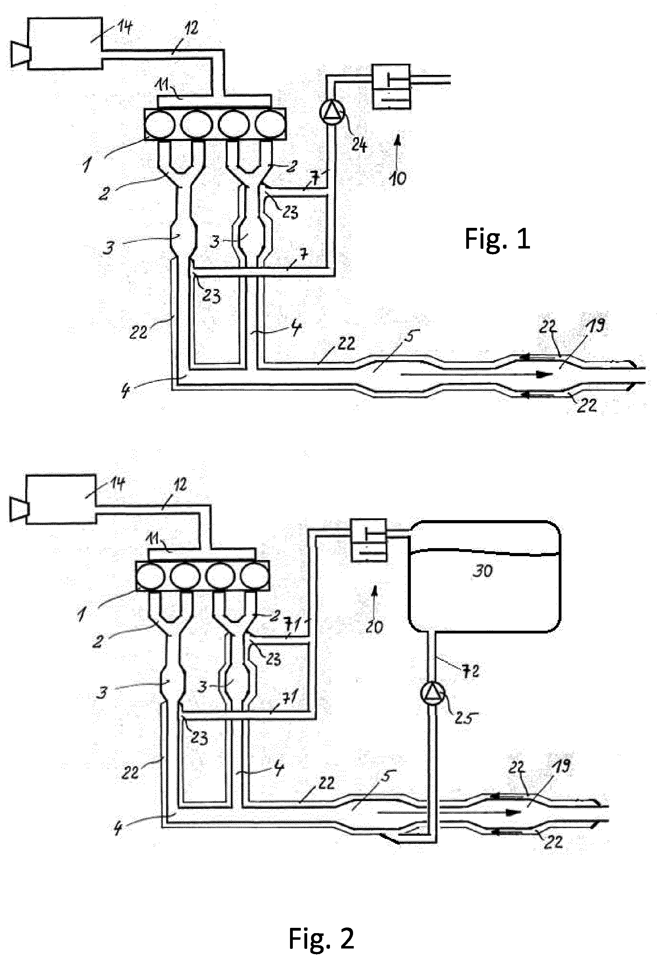

According to the option of figure 1, after the vacuum pump 24 has reached a predetermined vacuum pressure within the jacket, the valve 10 is operated into close operation to seal the piping 7 and then the vacuum pump is stopped. In this way, a possible leakage through the vacuum pump is prevented.

After the internal combustion engine is re-started, with the thermal management function active, the valve 10 is operated into open position to release the vacuum within the jacket, only after the ATS temperature has reached a predetermined temperature threshold, so as to prevent the above-mentioned damaging of the metal sheets.

Therefore, the vacuum is released only if really needed and can depend on the structural characteristics of the canning of the abatement devices defining the ATS.

According to a second option, under the teachings of the invention, disclosed through figure 2, the ATS, similarly as in figure 1, is provided of a jacket 22 enveloping at least a portion of the ATS.

The lower portion of the jacket 22, in operating condition, is connected to a lower portion of a well-insulated tank 30, at least through one piping 72 on which a liquid pump 25 is arranged.

A tank thermal insulation can be realized according to any known method.

The liquid pump 25 is suitable to move a thermal liquid from the jacket 22 to the well-insulated tank 30.

According to one embodiment of the present option, air replaces, into the jacket 22, the thermal liquid that is moved by the pump 25 into the tank 30. In particular, as shown in figure 2, such air flows into the jacket 22 through the control of a valve 20, e.g. defined by an on-off valve.

According to the relative position of the tank 30 and the jacket 22, the thermal liquid can move from the tank 30 into the jacket 22 by gravity, or it can be pumped by reversing the liquid pump 25.

In this situation (refilling of the space in the jacket 22 by menas of the liquid from the tank 30), the air within the jacket 22 should be vented (e.g. discharged towards the outer environment or towards the tank 30), while a corresponding amount of air should replace, within the tank 30, the thermal liquid volume. Indeed, it is preferable that the tank 30 is closed. In any case, suitable venting valves, as valve 31 described below, can be implemented to manage air sucking/venting.

According to the example of figure 2, the second (second does imply the presence of a first) piping 72 is connected to a lower portion of the tank 30, such that the thermal liquid can fall naturally (i.e. by gravity) within the jacket 22, while the air contained therein is being vented. Preferably, as mentioned above, a first piping 71 connects an operatively upper portion of the jacket 22 with an upper portion or zone of the tank 30 and a first on/off valve 20 is arranged thereon.

Once the valve 20 is closed, the thermal liquid cannot enter into the jacket 22, because the gas herewith contained cannot reach the upper portion of the tank 30. According to this embodiment, between the tank 30 and the jacket 22, a closed circuit is realized. Therefore, instead of using air, a specific gas can be used as insulation, such as argon or the like.

Therefore, during cold nights, the driver can activate a thermal management function, in such a manner that a thermal insulation gas (e.g. air) moves within the jacket 22 (valve 20 is opened), while warm thermal liquid is pumped into the tank 30; when the warm thermal liquid is replaced with gas in the jacket 22, valve 20 is closed and pump 25 is stopped. On the other hand, during engine operation, the thermal liquid is moved within the jacket 22.

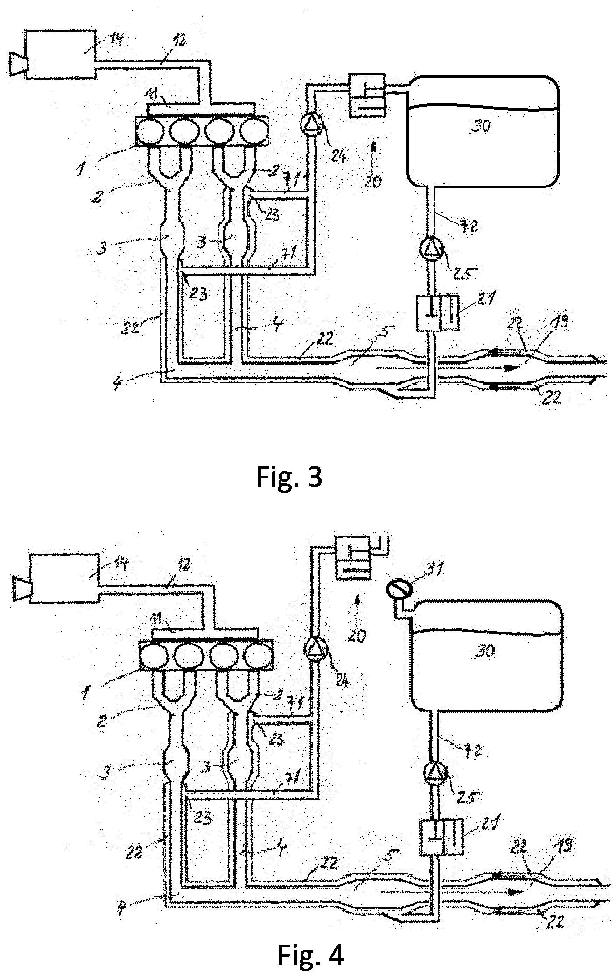

Figure 3 discloses one of several possible combinations of the two main options described through figures 1 and 2. Here, with respect to figure 2, a vacuum pump 24 is arranged on the first piping 71 and second on/off valve 21 is arranged on the second piping 72.

When the driver activates the thermal management function, first and second on/off valves 20, 21 are opened, then thermal liquid is pumped through the liquid pump 25 from the jacket 22 to the tank 30. When all the liquid is replaced with gas in the jacket 22, second on/off valve 21 closes and liquid pump 25 stops. Then, vacuum pump 24 is activated; afterwards, first on/off valve 20 is closed and vacuum pump 24 stops.

When the engine is re-started, or after a certain period, if the thermal liquid has a temperature above a predetermined threshold, the on/off valve 21 opens so as to immediately refill the jacket 22. Otherwise, the thermal liquid is introduced into the jacket 22 gradually, after the ATS has reached the above light-off temperature, in order to maintain the ATS close to said light-off temperature.

It is clear to the skilled person in the art, that metering valves can be implemented instead of the cheaper on/off valves.

A suitable control unit can be implemented to control the vacuum pump 24 and/or the liquid pump 25 and the needed valves 10, 20, 21, as a response of the pushing/manipulation of the switch or button. The control unit is arranged to monitor the operating conditions of the engine, ATS temperature, thermal liquid temperature, and so on, such that the thermal management function is activated only after the engine is switched off and suitably deactivated before or after engine re-start.

Indeed, when the stored thermal liquid has a heat content that can be suitably exploited, the thermal liquid is introduced within the jacket 22 at engine re-start or even before such re-start (i.e. in response to an event, e.g. the opening of a vehicle door, indicating to the control unit that the engine is about to be re-started). On the other hand, if the heat content is not relevant, the thermal liquid is introduced within the jacket 22 only after the ATS has reached the light-off temperature threshold.

Preferably, the heat content is indirectly measured through the measurement of the stored thermal liquid temperature.

In addition, the heat content is judged as "useful" if the stored thermal liquid temperature is higher than the ATS temperature. It is clear that the efficiency of the heat exchange between the thermal liquid and the ATS should be considered during such judgment.

When vacuum is realized within the jacket 22, such vacuum is maintained as long as the canning can bears such depressurization during temperature increase, and in any case till the introduction of the thermal liquid into the jacket 22.

To introduce the thermal liquid within the jacket 22, second on/off valve 21 opens and, vacuum can be initially exploited to suck liquid from the tank 30. Then first on/off valve 20 opens and the thermal liquid can pass within the jacket 22 by gravity and/or by suction and/or by the reverse activation of the liquid pump 25.

Figure 4 discloses another possible embodiment of the invention.

Here, the first piping 71 has a first end opening in the jacket 22, wrapping at least a portion of the ATS, and a second end, opposite to the first one, communicating with the environment. On the first piping 71, a vacuum pump 24 and a first on/off valve 20 is arranged to generate and maintain the vacuum when the thermal management function is active.

Here, the second piping 72 communicates, at one end, with a lower portion of the jacket 22 and, at a second opposite end, with a lower portion of the tank 30.

On the second piping 72, the liquid pump 25 and the second on/off valve 21 are arranged.

An upper portion of the tank 30 communicates with the environment through a venting valve 31.

When the driver pushes the button to activate or enable the thermal management function, first the liquid is moved from the jacket 22 to the tank 30. Thus, both the on/off valves 20 and 21 are open, and the liquid pump 25 causes the movement of the thermal liquid.

When the thermal liquid is completely moved to the tank 30, second valve 21 closes and liquid pumps 25 stops. Then, vacuum pump 24 is activated till a predetermined vacuum pressure. Then, first on/off valve 20 closes and vacuum pump 24 stops.

The venting valve 31 permits to vent the air from the tank 30. On the other hand, when the thermal liquid is pumped within the jacket 22, the venting valve 31 permits air to replace the volume of thermal liquid moved to the jacket 22. The venting valve 31 can be a spring loaded valve or can be an electric-controllable valve. In this second case, the motion by gravity of the thermal liquid from the tank 30 to the jacket 22 is simplified.

On the other hand, when the engine is re-started, the same steps disclosed for the example of figure 3 are carried out.

According to a preferred embodiment of the invention, the thermal liquid coincides with engine water, or engine cooling liquid, and the jacket 22 is connectable with the engine cooling circuit, such that when the driver opens the vehicle, the engine water is moved, though a dedicated circuit, from the tank 30 within the engine cooling circuit. Then, the thermal management of the ATS is carried out as described above.

Engine re-start is inhibited as long as the moving of the engine liquid from the tank 30 to the engine cooling circuit is not complete.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. An After Treatment System (ATS) with a thermal management system, the ATS comprising a number of pollutants abatement devices and being conceived to convey and purify exhaust gas produced by an internal combustion engine (1), the thermal management system comprising:
- a jacket (22) wrapping at least a portion of said ATS,
- an insulated tank (30) suitable to store a thermal liquid,
- moving means for moving said thermal liquid between said jacket (22) and said insulated tank (30), said moving means comprising a piping connecting a lower portion of said jacket (22) with a lower portion of said insulated tank (30), and a liquid pump (25) suitable to move said thermal liquid from said jacket (22) to said insulated tank (30), **characterized in that** the thermal management system comprises
- control means configured to control said moving means
• to introduce said thermal liquid in said jacket (22), so as to exchange heat between the thermal liquid and said at least a portion of the ATS when the engine is operative, and
• to move the thermal liquid from said jacket (22) to said insulated tank (30) by said liquid pump (25) and store said thermal liquid in said insulated tank (30) when the engine is shut-off in order to store its heat content.

2. The ATS with the thermal management system according to claim 1, wherein said control means are configured to introduce the thermal liquid into said jacket (22) at an engine re-start, or even before such re-start, when the thermal liquid stored in said insulated tank (30) has a heat content that can be suitably exploited, and to introduce the thermal liquid into said jacket (22) only after the ATS has reached a threshold light-off temperature if the heat content of the thermal liquid stored in said insulated tank (30) is not relevant.

3. The ATS with the thermal management system according to claim 1 or 2, wherein said control means comprise a switch or button and a control unit, which is configured to activate and/or enable a thermal management function comprising an activation of said liquid pump to move the thermal liquid into said insulated tank (30) when said engine is detected as off and said switch or button is manipulated or pressed.

4. The ATS with the thermal management system according to claim 3, wherein the thermal management function consists in:
- the activation of said liquid pump to move the thermal liquid into said insulated tank (30) and
- afterwards, an activation of vacuum means (24,20) for generating a vacuum in said jacket (22) .

5. The ATS with the thermal management system according to claim 3 or 4, wherein said control unit is configured to check whether said internal combustion engine is off before enabling said thermal management function.

6. The ATS with the thermal management system according to claim 3 or 4, wherein said control unit is configured to monitor a state condition of said internal combustion engine; when the thermal management function is active and the internal combustion engine is switched on, the control unit is configured to:
- measure a liquid temperature of said thermal liquid within said insulated tank (30) and measure an ATS temperature,
- introduce said thermal liquid in said jacket (22) if the measured liquid temperature is higher than the measured ATS temperature,
- monitor said ATS temperature and gradually introduce said thermal liquid into said jacket (22) when the ATS temperature becomes above an ATS light-off temperature, if the measured liquid temperature is lower than the measured ATS temperature.

7. The ATS with the thermal management system according to claim 6, wherein the gradual introduction of the thermal liquid into said jacket (22) is carried out in order to maintain said ATS temperature as close as possible to said light-off temperature.

8. The ATS with the thermal management system according to claim 4, wherein said vacuum means include a vacuum pump (24) connected with said jacket (22) through a first piping (71) and an on/off valve (20) arranged on the first piping (71), upstream or downstream of the vacuum pump (24) to maintain said vacuum.

9. The ATS with the thermal management system according to anyone of previous claims, wherein said liquid pump (25) is arranged to move said thermal liquid from said jacket (22) to said insulated tank and vice versa.

10. The ATS with the thermal management system according to claim 8, wherein said moving means include a second piping (72) connecting a lower portion of said jacket (22) with a lower portion of said insulated tank (30); said liquid pump (25) being arranged to move said thermal liquid from said jacket to said insulated tank and vice versa; and wherein said first piping (71) has a first end connected with an upper portion of said jacket (22) and a second opposite end connected to an upper portion of said insulated tank (30).

11. The ATS with the thermal management system according to claim 9, wherein said moving means comprise a first piping (71) having a first end connected with an upper portion of said jacket (22) and a second opposite end connected to an upper portion of said insulated tank (30).

12. The ATS with the thermal management system according to claim 10 or 11, wherein a closed circuit is realized among the jacket, the first piping, the insulated tank and the second piping, and wherein an insulating gas is present and wherein, when said liquid pump (25) moves the thermal liquid to the insulated tank (30), said insulating gas moves to the jacket (30) and vice versa.

13. An assembly including an internal combustion engine and an After Treatment System (ATS) with a thermal management system according to any one of claims 1 to 12, the ATS being arranged to treat exhaust gas produced by the internal combustion engine.

14. The assembly according to claim 13, wherein said thermal liquid coincides with an engine cooling liquid and the jacket is connectable with an engine cooling circuit such that, before internal combustion engine re-start, the engine cooling liquid is moved, though a dedicated circuit, from said insulated tank (30) within the engine cooling circuit.

15. Method for thermal management of an After Treatment System (ATS), wherein at least a portion of the ATS is enveloped by a jacket (22), the method comprising the steps of
- introducing a thermal liquid in said jacket, so as to exchange heat between the thermal liquid and said at least a portion of the ATS when the engine is operative, and
- moving the thermal liquid from said jacket (22) to an insulated tank (30) by a liquid pump (25) and storing said thermal liquid in said insulated tank (30) when the engine is shut-off in order to store its heat content.

## Patentansprüche

1. Nachbehandlungssystem (ATS) mit einem Temperaturmanagementsystem, wobei das ATS mehrere Schadstoffverringerungsvorrichtungen umfasst und konzipiert ist, Abgas, das durch eine Brennkraftmaschine (1) erzeugt wird, zu transportieren und zu reinigen, wobei das Temperaturmanagementsystem Folgendes umfasst:
- einen Mantel (22), der mindestens einen Abschnitt des ATS umhüllt,
- einen isolierten Behälter (30), der geeignet ist, eine Wärmeträgerflüssigkeit zu bevorraten, und
- Bewegungsmittel zum Bewegen der Wärmeträgerflüssigkeit zwischen dem Mantel (22) und dem isolierten Behälter (30), wobei das Bewegungsmittel eine Verrohrung, die einen unteren Abschnitt des Mantels (22) mit einem unteren Abschnitt des isolierten Behälters (30) verbindet, und eine Flüssigkeitspumpe (25), die geeignet ist, die Wärmeträgerflüssigkeit vom Mantel (22) zum isolierten Behälter (30) zu bewegen, umfasst, wobei
das Temperaturmanagementsystem **gekennzeichnet ist durch**:
- Steuermittel, die konfiguriert sind zum Steuern der Bewegungsmittel zum:
• Einbringen der Wärmeträgerflüssigkeit in den Mantel (22), um Wärme zwischen der Wärmeträgerflüssigkeit und dem mindestens einen Abschnitt des ATS zu tauschen, wenn die Kraftmaschine in Betrieb ist, und
• Bewegen der Wärmeträgerflüssigkeit vom Mantel (22) zum isolierten Behälter (30) **durch** die Flüssigkeitspumpe (25) und Bevorraten der Wärmeträgerflüssigkeit im isolierten Behälter (30), wenn die Kraftmaschine abgeschaltet ist, um ihren Wärmegehalt zu bevorraten.

2. ATS mit einem Temperaturmanagementsystem nach Anspruch 1, wobei die Steuermittel konfiguriert sind, die Wärmeträgerflüssigkeit bei einem Kraftmaschineneustart oder sogar vor einem derartigen Neustart in den Mantel (22) einzubringen, wenn die Wärmeträgerflüssigkeit, die im isolierten Behälter (30) bevorratet ist, einen Wärmegehalt besitzt, der geeignet ausgenutzt werden kann, und die Wärmeträgerflüssigkeit in den Mantel (22) lediglich einzubringen, nachdem das ATS einen Anspringtemperaturschwellenwert erreicht hat, falls der Wärmegehalt der Wärmeträgerflüssigkeit, die im isolierten Behälter (30) bevorratet ist, nicht relevant ist.

3. ATS mit einem Temperaturmanagementsystem nach Anspruch 1 oder 2, wobei die Steuermittel einen Schalter oder eine Taste und eine Steuereinheit, die konfiguriert ist, eine Temperaturmanagementfunktion zu aktivieren und/oder zu ermöglichen, was eine Aktivierung der Flüssigkeitspumpe umfasst, um die Wärmeträgerflüssigkeit in den isolierten Behälter (30) zu bewegen, wenn die Kraftmaschine als aus detektiert wird und der Schalter oder die Taste betätigt oder gedrückt wird, umfassen.

4. ATS mit einem Temperaturmanagementsystem nach Anspruch 3, wobei die Temperaturmanagementfunktion aus Folgendem besteht:
- der Aktivierung der Flüssigkeitspumpe, um die Wärmeträgerflüssigkeit in den isolierten Behälter (30) zu bewegen, und
- danach einer Aktivierung von Unterdruckmitteln (24, 20) zum Erzeugen eines Unterdrucks im Mantel (22)

5. ATS mit einem Temperaturmanagementsystem nach Anspruch 3 oder 4, wobei die Steuereinheit konfiguriert ist, vor dem Ermöglichen der Temperaturmanagementfunktion zu prüfen, ob die Brennkraftmaschine aus ist.

6. ATS mit einem Temperaturmanagementsystem nach Anspruch 3 oder 4, wobei die Steuereinheit konfiguriert ist, eine Zustandsbedingung der Brennkraftmaschine zu überwachen; und dann, wenn die Temperaturmanagementfunktion aktiv ist und die Brennkraftmaschine eingeschaltet ist, die Steuereinheit konfiguriert ist zum:
- Messen einer Flüssigkeitstemperatur der Wärmeträgerflüssigkeit im isolierten Behälter (30) und Messen einer ATS-Temperatur,
- Einbringen der Wärmeträgerflüssigkeit in den Mantel (22), falls die gemessene Flüssigkeitstemperatur größer als die gemessene ATS-Temperatur ist, und
- Überwachen der ATS-Temperatur und allmähliches Einbringen der Wärmeträgerflüssigkeit in den Mantel (22), wenn die ATS-Temperatur über einer ATS-Anspringtemperatur ist, falls die gemessene Flüssigkeitstemperatur geringer als die gemessene ATS-Temperatur ist.

7. ATS mit einem Temperaturmanagementsystem nach Anspruch 6, wobei die allmähliche Einbringung der Wärmeträgerflüssigkeit in den Mantel (22) ausgeführt wird, um die ATS-Temperatur so nahe wie möglich bei der Anspringtemperatur zu halten.

8. ATS mit einem Temperaturmanagementsystem nach Anspruch 4, wobei die Unterdruckmittel eine Unterdruckpumpe (24), die mit dem Mantel (22) durch eine erste Rohrleitung (71) verbunden ist, und ein Ein/Aus-Ventil (20), das an der ersten Rohrleitung (71) stromaufwärts oder stromabwärts der Unterdruckpumpe (24) angeordnet ist, um den Unterdruck aufrechtzuerhalten, enthalten.

9. ATS mit einem Temperaturmanagementsystem nach einem der vorhergehenden Ansprüche, wobei die Flüssigkeitspumpe (25) ausgelegt ist, die Wärmeträgerflüssigkeit vom Mantel (22) zum isolierten Behälter und umgekehrt zu bewegen.

10. ATS mit einem Temperaturmanagementsystem nach Anspruch 8, wobei die Bewegungsmittel eine zweite Rohrleitung (72) enthalten, die einen unteren Abschnitt des Mantels (22) mit einem unteren Abschnitt des isolierten Behälters (30) verbindet; die Flüssigkeitspumpe (25) ausgelegt ist, die Wärmeträgerflüssigkeit vom Mantel zum isolierten Behälter und umgekehrt zu bewegen; und die erste Rohrleitung (71) ein erstes Ende, das mit einem oberen Abschnitt des Mantels (22) verbunden ist, und ein zweites gegenüberliegendes Ende, das mit einem oberen Abschnitt des isolierten Behälters (30) verbunden ist, besitzt.

11. ATS mit einem Temperaturmanagementsystem nach Anspruch 9, wobei die Bewegungsmittel eine erste Rohrleitung (71) umfassen, die ein erstes Ende, das mit einem oberen Abschnitt des Mantels (22) verbunden ist, und ein zweites gegenüberliegendes Ende, das mit einem oberen Abschnitt des isolierten Behälters (30) verbunden ist, besitzt.

12. ATS mit einem Temperaturmanagementsystem nach Anspruch 10 oder 11, wobei ein geschlossener Kreis zwischen dem Mantel, der ersten Rohrleitung, dem isolierten Behälter und der zweiten Rohrleitung realisiert ist, ein Isoliergas vorhanden ist und dann, wenn die Flüssigkeitspumpe (25) die Wärmeträgerflüssigkeit zum isolierten Behälter (30) bewegt, das Isoliergas sich zum Mantel (30) und umgekehrt bewegt.

13. Anordnung, die eine Brennkraftmaschine und ein Nachbehandlungssystem (ATS) mit einem Temperaturmanagementsystem nach einem der Ansprüche 1 bis 12 enthält, wobei das ATS ausgelegt ist, ein Abgas zu behandeln, das durch die Brennkraftmaschine erzeugt wird.

14. Anordnung nach Anspruch 13, wobei die Wärmeträgerflüssigkeit mit einer Kraftmaschinenkühlflüssigkeit übereinstimmt und der Mantel mit einem Kraftmaschinenkühlkreis verbindbar ist, derart, dass vor einem Brennkraftmaschineneustart die Kraftmaschinenkühlflüssigkeit durch einen fest zugeordneten Kreis vom isolierten Behälter (30) im Kraftmaschinenkühlkreis bewegt wird.

15. Verfahren zum Temperaturmanagement eines Nachbehandlungssystems (ATS), wobei mindestens ein Abschnitt des ATS durch einen Mantel (22) umhüllt ist und das Verfahren die folgenden Schritte umfasst:
- Einbringen einer Wärmeträgerflüssigkeit in den Mantel, um Wärme zwischen der Wärmeträgerflüssigkeit und dem mindestens einen Abschnitt des ATS zu tauschen, wenn die Kraftmaschine in Betrieb ist, und
- Bewegen der Wärmeträgerflüssigkeit vom Mantel (22) zu einem isolierten Behälter (30) durch eine Flüssigkeitspumpe (25) und Bevorraten der Wärmeträgerflüssigkeit im isolierten Behälter (30), wenn die Kraftmaschine abgeschaltet ist, um ihren Wärmegehalt zu bevorraten.

## Revendications

1. Système de post-traitement (ATS) doté d'un système de gestion thermique, l'ATS comprenant un nombre de dispositifs de réduction de polluants et étant conçu pour transporter et purifier un gaz d'échappement produit par un moteur à combustion interne (1), le système de gestion thermique comprenant :
- une chemise (22) enveloppant au moins une partie dudit ATS,
- un réservoir isolé (30) approprié pour stocker un liquide thermique,
- des moyens de déplacement pour déplacer ledit liquide thermique entre ladite chemise (22) et ledit réservoir isolé (30), lesdits moyens de déplacement comprenant une tuyauterie raccordant une partie inférieure de ladite chemise (22) à une partie inférieure dudit réservoir isolé (30), et une pompe de liquide (25) appropriée pour déplacer ledit liquide thermique de ladite chemise (22) vers ledit réservoir isolé (30), **caractérisé en ce que** le système de gestion thermique comprend
- des moyens de commande configurés pour commander lesdits moyens de déplacement
• pour introduire ledit liquide thermique dans ladite chemise (22), de manière à échanger de la chaleur entre le liquide thermique et ladite au moins une partie de l'ATS lorsque le moteur est fonctionnel, et
• pour déplacer le liquide thermique de ladite chemise (22) vers ledit réservoir isolé (30) par ladite pompe de liquide (25) et stocker ledit liquide thermique dans ledit réservoir isolé (30) lorsque le moteur est coupé afin de stocker sa teneur en chaleur.

2. ATS doté du système de gestion thermique selon la revendication 1, dans lequel lesdits moyens de commande sont configurés pour introduire le liquide thermique dans ladite chemise (22) lors du redémarrage d'un moteur, ou même avant ledit redémarrage, lorsque le liquide thermique stocké dans ledit réservoir isolé (30) présente une teneur en chaleur qui peut être exploitée de manière appropriée, et pour introduire le liquide thermique dans ladite chemise (22) seulement après que l'ATS a atteint une température d'allumage seuil si la teneur en chaleur du liquide thermique stocké dans ledit réservoir isolé (30) n'est pas pertinente.

3. ATS doté du système de gestion thermique selon la revendication 1 ou 2, dans lequel lesdits moyens de commande comprennent un commutateur ou bouton et une unité de commande, qui est configurée pour activer et/ou permettre une fonction de gestion thermique comprenant une activation de ladite pompe de liquide pour déplacer le liquide thermique dans ledit réservoir isolé (30) lorsque ledit moteur est détecté comme étant éteint et ledit commutateur ou bouton est manipulé ou pressé.

4. ATS doté du système de gestion thermique selon la revendication 3, dans lequel la fonction de gestion thermique consiste en :
- l'activation de ladite pompe de liquide pour déplacer le liquide thermique dans ledit réservoir isolé (30) et
- après, une activation de moyens de vide (24, 20) pour générer un vide dans ladite chemise (22).

5. ATS doté du système de gestion thermique selon la revendication 3 ou 4, dans lequel ladite unité de commande est configurée pour contrôler si oui ou non ledit moteur à combustion interne est éteint avant de permettre ladite fonction de gestion thermique.

6. ATS doté du système de gestion thermique selon la revendication 3 ou 4, dans lequel ladite unité de commande est configurée pour contrôler une condition d'état dudit moteur à combustion interne ; lorsque la fonction de gestion thermique est active et que le moteur à combustion interne est mis en marche, l'unité de commande est configurée pour :
- mesurer une température de liquide dudit liquide thermique à l'intérieur dudit réservoir isolé (30) et mesurer une température d'ATS,
- introduire ledit liquide thermique dans ladite chemise (22) si la température de liquide mesurée est supérieure à la température d'ATS mesurée,
- contrôler ladite température d'ATS et introduire progressivement ledit liquide thermique dans ladite chemise (22) lorsque la température d'ATS devient supérieure à une température d'allumage d'ATS, si la température de liquide mesurée est inférieure à la température d'ATS mesurée.

7. ATS doté du système de gestion thermique selon la revendication 6, dans lequel l'introduction progressive du liquide thermique dans ladite chemise (22) est mise en œuvre afin de maintenir ladite température d'ATS aussi proche que possible de ladite température d'allumage.

8. ATS doté du système de gestion thermique selon la revendication **4,** dans lequel lesdits moyens de vide comportent une pompe à vide (24) raccordée à ladite chemise (22) à travers une première tuyauterie (71) et une soupape marche/arrêt (20) agencée sur la première tuyauterie (71), en amont ou en aval de la pompe à vide (24) pour maintenir ledit vide.

9. ATS doté du système de gestion thermique selon l'une quelconque des revendications précédentes, dans lequel ladite pompe de liquide (25) est conçue pour déplacer ledit liquide thermique de ladite chemise (22) vers ledit réservoir isolé et vice-versa.

10. ATS doté du système de gestion thermique selon la revendication 8, dans lequel lesdits moyens de déplacement comportent une seconde tuyauterie (72) raccordant une partie inférieure de ladite chemise (22) à une partie inférieure dudit réservoir isolé (30) ; ladite pompe de liquide (25) étant conçue pour déplacer ledit liquide thermique de ladite chemise vers ledit réservoir isolé et vice-versa ; et dans lequel ladite première tuyauterie (71) présente une première extrémité raccordée à une partie supérieure de ladite chemise (22) et une seconde extrémité opposée raccordée à une partie supérieure dudit réservoir isolé (30).

11. ATS doté du système de gestion thermique selon la revendication 9, dans lequel lesdits moyens de déplacement comprennent une première tuyauterie (71) présentant une première extrémité raccordée à une partie supérieure de ladite chemise (22) et une seconde extrémité opposée raccordée à une partie supérieure dudit réservoir isolé (30).

12. ATS doté du système de gestion thermique selon la revendication 10 ou 11, dans lequel un circuit fermé est réalisé parmi la chemise, la première tuyauterie, le réservoir isolé et la seconde tuyauterie, et dans lequel un gaz isolant est présent et dans lequel, lorsque ladite pompe de liquide (25) déplace le liquide thermique vers le réservoir isolé (30), ledit gaz isolant se déplace vers la chemise (30) et vice-versa.

13. Ensemble comportant un moteur à combustion interne et un système de post-traitement (ATS) doté d'un système de gestion thermique selon l'une quelconque des revendications 1 à 12, l'ATS étant conçu pour traiter un gaz d'échappement produit par le moteur à combustion interne.

14. Ensemble selon la revendication 13, dans lequel ledit liquide thermique coïncide avec un liquide de refroidissement de moteur et la chemise peut être raccordée à un circuit de refroidissement de moteur de sorte que, avant le redémarrage du moteur à combustion interne, le liquide de refroidissement de moteur soit déplacé, par le biais d'un circuit dédié, à partir dudit réservoir isolé (30) à l'intérieur du circuit de refroidissement de moteur.

15. Méthode de gestion thermique d'un système de post-traitement (ATS), dans lequel au moins une partie de l'ATS est enveloppée par une chemise (22), la méthode comprenant les étapes suivantes :
- l'introduction d'un liquide thermique dans ladite chemise, de manière à échanger de la chaleur entre le liquide thermique et ladite au moins une partie de l'ATS lorsque le moteur est fonctionnel, et
- le déplacement du liquide thermique de ladite chemise (22) vers un réservoir isolé (30) par une pompe de liquide (25) et le stockage dudit liquide thermique dans ledit réservoir isolé (30) lorsque le moteur est coupé afin de stocker sa teneur en chaleur.
